# EUROPEAN PATENT APPLICATION

(11) **EP 3 923 205 A1**
(43) Date of publication of application: **15.12.2021**
(21) Application number: 20217358.9
(22) Date of filing: 28.12.2020
(51) Int. Cl.: G06N 3/08, G06N 3/04

(54) **METHOD AND APPARATUS FOR DISTILLING MODEL, ELECTRONIC DEVICE, AND STORAGE MEDIUM**

(30) Priority: 09.06.2020 CN 202010516895
(71) Applicant: BEIJING BAIDU NETCOM SCIENCE AND TECHNOLOGY CO. LTD., 100085 Beijing (CN)
(72) Inventor: SU, Weiyue, Beijing, 100085 (CN); FENG, Shikun, Beijing, 100085 (CN); ZHU, Zhifan, Beijing, 100085 (CN); LI, Weibin, Beijing, 100085 (CN); HE, Jingzhou, Beijing, 100085 (CN); HUANG, Shiwei, Beijing, 100085 (CN)
(74) Representative: Maiwald Patent- und Rechtsanwaltsgesellschaft mbH

(57) **Abstract**

The disclosure discloses a method and apparatus for distilling a model, an electronic device, and a storage medium, and relates to the field of deep learning technologies. A teacher model and a student model are obtained. The second intermediate fully connected layer is transformed into an enlarged fully connected layer and a reduced fully connected layer based on a first data processing capacity of a first intermediate fully connected layer of the teacher model and a second data processing capacity of a second intermediate fully connected layer of the student model. The second intermediate fully connected layer is replaced with the enlarged fully connected layer and the reduced fully connected layer to generate a training student model. The training student model is distilled based on the teacher model.

## Description

### FIELD

The disclosure relates to the field of artificial intelligence technologies, specifically, to the field of deep learning technologies, and more particularly, to a method and an apparatus for distilling a model, an electronic device, and a computer-readable storage medium.

### BACKGROUND

Currently, deep neural network models have a wide range of applications in the field of artificial intelligence. However, since models with good effects require complex calculations, it is difficult to achieve real-time calculations in Internet scenes.

In the related art, the above problem may be solved by obtaining a small model with a small amount of calculation through distilling calculation on a complex large model. There are two ways about distilling calculation. The first way is to distill the last layer of the neural network, and to determine a prediction result of a large model as a soft label to assist a small model in training. The second way is to distill an intermediate layer between the large model and the small model. Since hidden layers of the large model are different from hidden layers of the small model, an additional fully connected layer is introduced for transition. However, with respect to the first way, since only the last layer of the neural network is distilled, the efficiency of distilling is low and an overall effect is poor. With respect to the second way, introducing the additional fully connected layer for distilling may waste some parameters, and thus, the effect of distilling is not ideal.

### SUMMARY

Embodiments of a first aspect of the disclosure provide the method for distilling the model. The method includes: obtaining a teacher model and a student model, in which the teacher model has a first intermediate fully connected layer, the student model has a second intermediate fully connected layer, an input of the first intermediate fully connected layer is a first data processing capacity M, an output of the first intermediate fully connected layer is the first data processing capacity M, an input of the second intermediate fully connected layer is a second data processing capacity N, an output of the second intermediate fully connected layer is the second data processing capacity N, M and N are positive integers, and M is greater than N; transforming, based on the first data processing capacity M and the second data processing capacity N, the second intermediate fully connected layer into an enlarged fully connected layer and a reduced fully connected layer, and replacing the second intermediate fully connected layer with the enlarged fully connected layer and the reduced fully connected layer to generate a training student model; and distilling the training student model based on the teacher model.

Alternatively, an input of the enlarged fully connected layer is the second data processing capacity N, an output of the enlarged fully connected layer is the first data processing capacity M, an input of the reduced fully connected layer is the first data processing capacity M, and an output of the reduced fully connected layer is the second data processing capacity N.

Alternatively, the enlarged fully connected layer having no activation function.

Alternatively, distilling the training student model based on the teacher model includes: obtaining a distillation loss; and distilling the training student model based on the distillation loss and the teacher model.

Alternatively, the method further includes: transforming the training student model after the distilling to generate a prediction model.

Alternatively, transforming the training student model after the distilling to generate the prediction model includes: merging the enlarged fully connected layer and the reduced fully connected layer in the training student model after the distilling into a third intermediate fully connected layer to generate the prediction model.

Embodiments of a second aspect of the disclosure provide an apparatus for distilling a model. The apparatus includes: an obtaining module, configured to obtain a teacher model and a student model, in which the teacher model has a first intermediate fully connected layer, the student model has a second intermediate fully connected layer, an input of the first intermediate fully connected layer is a first data processing capacity M, an output of the first intermediate fully connected layer is the first data processing capacity M, an input of the second intermediate fully connected layer is a second data processing capacity N, an output of the second intermediate fully connected layer is the second data processing capacity N, M and N are positive integers, and M is greater than N; a transforming and replacing module, configured to transform, based on the first data processing capacity M and the second data processing capacity N, the second intermediate fully connected layer into an enlarged fully connected layer and a reduced fully connected layer, and to replace the second intermediate fully connected layer with the enlarged fully connected layer and the reduced fully connected layer to generate a training student model; and a distilling module, configured to distill the training student model based on the teacher model.

Alternatively, an input of the enlarged fully connected layer is the second data processing capacity N, an output of the enlarged fully connected layer is the first data processing capacity M, an input of the reduced fully connected layer is the first data processing capacity M, and an output of the reduced fully connected layer is the second data processing capacity N.

Alternatively, the enlarged fully connected layer having no activation function.

Alternatively, the distilling module is configured to: obtain a distillation loss; and distill the training student model based on the distillation loss and the teacher model.

Alternatively, the apparatus further includes: a transforming module, configured to transform the training student model after the distilling to generate a prediction model.

Alternatively, the transforming module is configured to: merge the enlarged fully connected layer and the reduced fully connected layer in the training student model after the distilling into a third intermediate fully connected layer to generate the prediction model.

Embodiments of a third aspect of the disclosure provide an electronic device. The electronic device includes at least one processor and a storage device communicatively connected to the at least one processor. The storage device stores an instruction executable by the at least one processor. When the instruction is executed by the at least one processor, the at least one processor may implement the method for distilling the model as described above.

Embodiments of a fourth aspect of the disclosure provide a computer-readable storage medium having a computer instruction stored thereon. The computer instruction is configured to enable a computer to implement the method for distilling the model as described above.

It should be understood that the content described in the summary is not intended to identify key or important features of embodiments of the disclosure, nor is it intended to limit the scope of the disclosure. Other features of the disclosure will be easily understood by the following description.

### BRIEF DESCRIPTION OF THE DRAWINGS

The accompanying drawings are used for a better understanding of the solution, and do not constitute a limitation to the disclosure.
FIG. 1 is a schematic diagram according to Embodiment 1 of the disclosure.
FIG. 2 is a schematic diagram according to Embodiment 2 of the disclosure.
FIG. 3 is a schematic diagram of a method for distilling a model according to embodiments of the disclosure.
FIG. 4 is a schematic diagram according to Embodiment 3 of the disclosure.
FIG. 5 is a schematic diagram according to Embodiment 4 of the disclosure.
FIG. 6 is a block diagram of an electronic device configured to implement a method for distilling a model according to embodiments of the disclosure.

### DETAILED DESCRIPTION

Exemplary embodiments of the disclosure are described below with reference to the accompanying drawings, which include various details of the embodiments of the disclosure to facilitate understanding, and should be considered as merely exemplary. Therefore, those skilled in the art should recognize that various changes and modifications may be made to the embodiments described herein without departing from the scope and spirit of the disclosure. Also, for clarity and conciseness, descriptions of well-known functions and structures are omitted in the following description.

A method and an apparatus for distilling a model, an electronic device, and a storage medium according to embodiments of the disclosure may be described below with reference to the accompanying drawings.

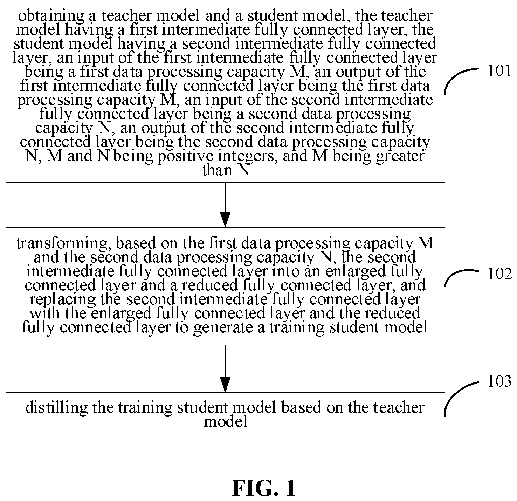

FIG. 1 is a schematic diagram according to Embodiment 1 of the disclosure. It should be noted that an execution subject of the embodiments of the disclosure is an apparatus for distilling a model. The apparatus for distilling the model may be a hardware device, or software in the hardware device.

As illustrated in FIG. 1, the method for distilling the model is implemented as follows.

At block 101, a teacher model and a student model are obtained. The teacher model has a first intermediate fully connected layer. The student model has a second intermediate fully connected layer. An input of the first intermediate fully connected layer is a first data processing capacity M. An output of the first intermediate fully connected layer is the first data processing capacity M. An input of the second intermediate fully connected layer is a second data processing capacity N. An output of the second intermediate fully connected layer is the second data processing capacity N. M and N are positive integers. M is greater than N.

In embodiments of the disclosure, a pre-trained complex neural network model with good performance may be used as the teacher model, and an untrained simple neural network model may be used as the student model. It should be noted that the teacher model has the first intermediate fully connected layer, and the student model has the second intermediate fully connected layer. The input of the first intermediate fully connected layer is the first data processing capacity M. The output of the first intermediate fully connected layer is the first data processing capacity M. The input of the second intermediate fully connected layer is the second data processing capacity N. The output of the second intermediate fully connected layer is the second data processing capacity N. M and N are positive integers. M is greater than N.

At block 102, the second intermediate fully connected layer is transformed, based on the first data processing capacity M and the second data processing capacity N, into an enlarged fully connected layer and a reduced fully connected layer. The second intermediate fully connected layer is replaced with the enlarged fully connected layer and the reduced fully connected layer to generate a training student model.

It should be understood that since both the input and output of the second intermediate fully connected layer of the student model are the second data processing capacity N, data capacity of the input and output of transforming the second intermediate fully connected layer into the enlarged fully connected layer and the reduced fully connected layer is also the second data processing capacity N.

As an example, the input of the enlarged fully connected layer is preset as N, the output of the enlarged fully connected layer is preset as M, the input of the reduced fully connected layer is preset as M, and the output of the reduced fully connected layer is preset as N. Therefore, the second intermediate fully connected layer is transformed into the enlarged fully connected layer and the reduced fully connected layer. The second intermediate fully connected layer is replaced by the enlarged fully connected layer and the reduced fully connected layer to generate the training student model, such that the data capacity of the input and output of the fully connected layer replaced is the second data processing capacity N.

It should be noted that the enlarged fully connected layer has no activation function. The output and input of the data capacity of the enlarged fully connected layer may maintain a linear combination, and thus the enlarged fully connected layer and the reduced fully connected layer may be effectively merged.

At block 103, the training student model is distilled based on the teacher model.

In some embodiments, a distillation loss is obtained. The training student model is distilled based on the distillation loss and the teacher model.

In other words, when the training student model is distilled based on the teacher model, deep learning may be used for training. Compared with other machine learning methods, deep learning performs better on sets of big data. As an example, a difference between output results of the enlarged fully connected layer of the training student model and the first intermediate fully connected layer of the teacher model for the same task may be determined as the distillation loss (for example, a loss function). When the training student model is trained through deep learning based on the teacher model, parameters of the enlarged fully connected layer of the training student model may be adjusted until the distillation loss is the smallest, so that the training effect of the training student model may be closer to the effect produced by the teacher model.

In summary, the second intermediate fully connected layer of the training student model is replaced with the enlarged fully connected layer and the reduced fully connected layer, and the training student model is distilled based on the teacher model, such that the intermediate layer of the training student model is distilled without introducing the additional fully connected layer, and no parameter redundancy exists, thereby greatly improving the efficiency and effect of distilling.

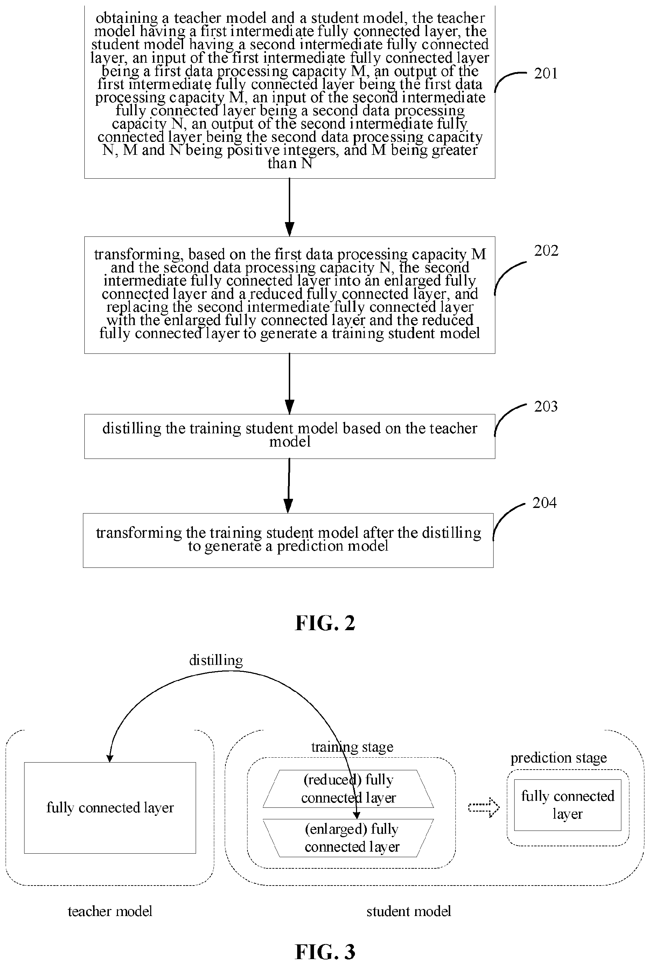

In order to speed up model prediction, in embodiments of the disclosure, as illustrated in FIG. 2, which is a schematic diagram of Embodiment 2 of the disclosure, the enlarged fully connected layer and the reduced fully connected layer that are split during training and that are of the training student model may be merged in a prediction stage to make the scale of the fully connected layer smaller. The specific implementation process is as follows.

At block 201, a teacher model and a student model are obtained. The teacher model has a first intermediate fully connected layer. The student model has a second intermediate fully connected layer. An input of the first intermediate fully connected layer is a first data processing capacity M. An output of the first intermediate fully connected layer is the first data processing capacity M. An input of the second intermediate fully connected layer is a second data processing capacity N. An output of the second intermediate fully connected layer is the second data processing capacity N. M and N are positive integers. M is greater than N.

At block 202, the second intermediate fully connected layer is transformed, based on the first data processing capacity M and the second data processing capacity N, into an enlarged fully connected layer and a reduced fully connected layer. The second intermediate fully connected layer is replaced with the enlarged fully connected layer and the reduced fully connected layer to generate a training student model.

At block 203, the training student model is distilled based on the teacher model.

In embodiments of the disclosure, description of blocks 201-203 may be referred to description of blocks 101-103 of embodiments illustrated in FIG. 1, and will not be repeated herein.

At block 204, the training student model after the distilling is transformed to generate a prediction model.

In some embodiments, the enlarged fully connected layer and the reduced fully connected layer in the training student model after the distilling are merged into a third intermediate fully connected layer to generate the prediction model.

In other words, since the output of the enlarged fully connected layer has no activation function, the enlarged fully connected layer and the reduced fully connected layer may be transformed into a miniaturized fully connected layer with an equivalent input and output of the second data processing capacity N. As an example, the enlarged fully connected layer and the reduced fully connected layer in the training student model after the distilling are merged into the third intermediate fully connected layer. For example, parameters of the enlarged fully connected layer and the reduced fully connected layer may be multiplied in advance. The parameters multiplied are determined as parameters of the third intermediate fully connected layer. The model with the third intermediate fully connected layer is determined as the prediction model, and this model is used for prediction.

In summary, the second intermediate fully connected layer of the training student model is replaced with the enlarged fully connected layer and the reduced fully connected layer. The training student model is distilled based on the teacher model. The training student model after the distilling is transformed to generate the prediction model. Consequently, the intermediate layer of the training student model is distilled without introducing the additional fully connected layer, and no parameter redundancy exists, thereby greatly improving the efficiency and effect of distilling. In addition, the enlarged fully connected layer and the reduced fully connected layer that are split during training may be merged into the third fully connected layer in the prediction stage, such that the scale of the prediction model becomes smaller, and the prediction of the model is sped up.

In order to illustrate the above-mentioned embodiments more clearly, an example is now described.

For example, as illustrated in FIG. 3, in the training stage of the student model, the second intermediate fully connected layer of the training student model is replaced with the enlarged fully connected layer and the reduced fully connected layer. The training student model is distilled based on the teacher model. In the prediction stage, the enlarged fully connected layer and the reduced fully connected layer split during training are merged into a fully connected layer. Consequently, the intermediate layer of the training student model is distilled without introducing the additional fully connected layer, and no parameter redundancy exists, thereby greatly improving the efficiency and effect of distilling. In addition, the enlarged fully connected layer and the reduced fully connected layer that are split during training may be merged into the third fully connected layer in the prediction stage, such that the scale of the prediction model becomes smaller, and the prediction of the model is sped up.

With the method for distilling the model according to embodiments of the disclosure, the teacher model and the student model are obtained. The teacher model has the first intermediate fully connected layer. The student model has the second intermediate fully connected layer. The input of the first intermediate fully connected layer is the first data processing capacity M. The output of the first intermediate fully connected layer is the first data processing capacity M. The input of the second intermediate fully connected layer is the second data processing capacity N. The output of the second intermediate fully connected layer is the second data processing capacity N. M and N are positive integers. M is greater than N. The second intermediate fully connected layer is transformed, based on the first data processing capacity M and the second data processing capacity N, into the enlarged fully connected layer and the reduced fully connected layer. The second intermediate fully connected layer is replaced with the enlarged fully connected layer and the reduced fully connected layer to generate the training student model. The training student model is distilled based on the teacher model. With the method, the second intermediate fully connected layer of the training student model is replaced with the enlarged fully connected layer and the reduced fully connected layer, and the training student model is distilled based on the teacher model, such that the intermediate layer of the training student model is distilled without introducing the additional fully connected layer, and no parameter redundancy exists, thereby greatly improving the efficiency and effect of distilling. In addition, the enlarged fully connected layer and the reduced fully connected layer that are split during training may be merged into the third fully connected layer in the prediction stage, such that the scale of the prediction model becomes smaller, and the prediction of the model is sped up.

To implement the above embodiments, embodiments of the disclosure further provide an apparatus for distilling a model.

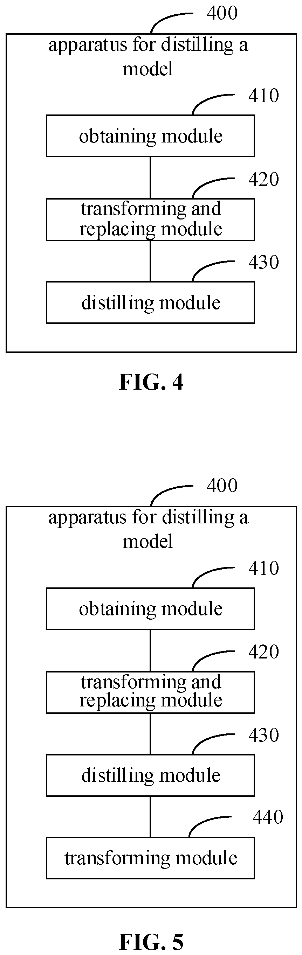

FIG. 4 is a schematic diagram of Embodiment 3 of the disclosure. As illustrated in FIG. 4, an apparatus 400 for distilling a model includes an obtaining module 410, a transforming and replacing module 420 and a distilling module 430.

The obtaining module 410 is configured to obtain a teacher model and a student model. The teacher model has a first intermediate fully connected layer. The student model has a second intermediate fully connected layer. An input of the first intermediate fully connected layer is a first data processing capacity M. An output of the first intermediate fully connected layer is the first data processing capacity M. An input of the second intermediate fully connected layer is a second data processing capacity N. An output of the second intermediate fully connected layer is the second data processing capacity N. M and N are positive integers. M is greater than N. The transforming and replacing module 420 is configured to transform, based on the first data processing capacity M and the second data processing capacity N, the second intermediate fully connected layer into an enlarged fully connected layer and a reduced fully connected layer, and to replace the second intermediate fully connected layer with the enlarged fully connected layer and the reduced fully connected layer to generate a training student model. The distilling module 430 is configured to distill the training student model based on the teacher model.

As a possible implementation of embodiments of the disclosure, an input of the enlarged fully connected layer is the second data processing capacity N. An output of the enlarged fully connected layer is the first data processing capacity M. An input of the reduced fully connected layer is the first data processing capacity M. An output of the reduced fully connected layer is the second data processing capacity N.

As a possible implementation of embodiments of the disclosure, the enlarged fully connected layer has no activation function.

As a possible implementation of embodiments of the disclosure, the distilling module 430 is configured to: obtain a distillation loss; and distill the training student model based on the distillation loss and the teacher model.

As a possible implementation of embodiments of the disclosure, as illustrated in FIG. 5 and on the basis of FIG. 4, the apparatus 400 for distilling the model further includes a transforming module 440.

The transforming module 440 is configured to transform the training student model after the distilling to generate a prediction model.

As a possible implementation of embodiments of the disclosure, the transforming module 440 is configured to merge the enlarged fully connected layer and the reduced fully connected layer in the training student model after the distilling into a third intermediate fully connected layer to generate the prediction model.

With the apparatus for distilling the model according to embodiments of the disclosure, the teacher model and the student model are obtained. The teacher model has the first intermediate fully connected layer. The student model has the second intermediate fully connected layer. The input of the first intermediate fully connected layer is the first data processing capacity M. The output of the first intermediate fully connected layer is the first data processing capacity M. The input of the second intermediate fully connected layer is the second data processing capacity N. The output of the second intermediate fully connected layer is the second data processing capacity N. M and N are positive integers. M is greater than N. The second intermediate fully connected layer is transformed, based on the first data processing capacity M and the second data processing capacity N, into the enlarged fully connected layer and the reduced fully connected layer. The second intermediate fully connected layer is replaced with the enlarged fully connected layer and the reduced fully connected layer to generate the training student model. The training student model is distilled based on the teacher model. With the method, the second intermediate fully connected layer of the training student model is replaced with the enlarged fully connected layer and the reduced fully connected layer, and the training student model is distilled based on the teacher model, such that the intermediate layer of the training student model is distilled without introducing the additional fully connected layer, and no parameter redundancy exists, thereby greatly improving the efficiency and effect of distilling. In addition, the enlarged fully connected layer and the reduced fully connected layer that are split during training may be merged into the third fully connected layer in the prediction stage, such that the scale of the prediction model becomes smaller, and the prediction of the model is sped up.

According to embodiments of the disclosure, an electronic device and a readable storage medium are further provided.

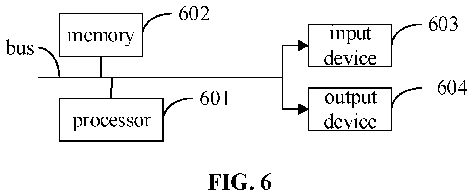

FIG. 6 is a block diagram of an electronic device configured to implement a method for distilling a model according to embodiments of the disclosure. The electronic device is intended to represent various forms of digital computers, such as a laptop computer, a desktop computer, a workbench, a personal digital assistant, a server, a blade server, a mainframe computer and other suitable computers. The electronic device may also represent various forms of mobile devices, such as a personal digital processor, a cellular phone, a smart phone, a wearable device and other similar computing devices. Components shown herein, their connections and relationships as well as their functions are merely examples, and are not intended to limit the implementation of the disclosure described and/or required herein.

As illustrated in FIG. 6, the electronic device includes one or more processors 601, a memory 602, and interfaces for connecting various components, including a high-speed interface and a low-speed interface. The components are interconnected by different buses and may be mounted on a common motherboard or otherwise installed as required. The processor may process instructions executed within the electronic device, including instructions stored in or on the memory to display graphical information of the GUI on an external input/output device (such as a display device coupled to the interface). In other embodiments, when necessary, multiple processors and/or multiple buses may be used with multiple memories. Similarly, multiple electronic devices may be connected, each providing some of the necessary operations (for example, as a server array, a group of blade servers, or a multiprocessor system). One processor 601 is taken as an example in FIG. 6.

The memory 602 is a non-transitory computer-readable storage medium provided by the disclosure. The memory stores instructions executable by at least one processor, so that the at least one processor executes the method for distilling the model provided by the disclosure. The non-transitory computer-readable storage medium according to the disclosure stores computer instructions, which are configured to make the computer execute the method for distilling the model provided by the disclosure.

As a non-transitory computer-readable storage medium, the memory 602 may be configured to store non-transitory software programs, non-transitory computer executable programs and modules, such as program instructions/modules (for example, the obtaining module 410, the transforming and replacing module 420 and the distilling module 430 illustrated in FIG. 4) corresponding to the method for distilling the model according to embodiments of the disclosure. The processor 601 executes various functional applications and performs data processing of the server by running non-transitory software programs, instructions and modules stored in the memory 602, that is, the method for distilling the model according to the foregoing method embodiments is implemented.

The memory 602 may include a storage program area and a storage data area, where the storage program area may store an operating system and applications required for at least one function; and the storage data area may store data created according to the use of the electronic device that implements the method for distilling the model, and the like. In addition, the memory 602 may include a high-speed random-access memory, and may further include a non-transitory memory, such as at least one magnetic disk memory, a flash memory device, or other non-transitory solid-state memories. In some embodiments, the memory 602 may optionally include memories remotely disposed with respect to the processor 601, and these remote memories may be connected to the electronic device, which is configured to implement the method for distilling the model, through a network. Examples of the network include, but are not limited to, the Internet, an intranet, a local area network, a mobile communication network, and combinations thereof.

The electronic device configured to implement the method for distilling the model may further include an input device 603 and an output device 604. The processor 601, the memory 602, the input device 603 and the output device 604 may be connected through a bus or in other manners. FIG. 6 is illustrated by establishing the connection through a bus.

The input device 603 may receive input numeric or character information, and generate key signal inputs related to user settings and function control of the electronic device configured to implement the method for distilling the model, such as a touch screen, a keypad, a mouse, a trackpad, a touchpad, a pointing stick, one or more mouse buttons, trackballs, joysticks and other input devices. The output device 604 may include a display device, an auxiliary lighting device (for example, an LED), a haptic feedback device (for example, a vibration motor), and so on. The display device may include, but is not limited to, a liquid crystal display (LCD), a light emitting diode (LED) display and a plasma display. In some embodiments, the display device may be a touch screen.

Various implementations of systems and technologies described herein may be implemented in digital electronic circuit systems, integrated circuit systems, application-specific ASICs (application-specific integrated circuits), computer hardware, firmware, software, and/or combinations thereof. These various implementations may include: being implemented in one or more computer programs that are executable and/or interpreted on a programmable system including at least one programmable processor. The programmable processor may be a dedicated or general-purpose programmable processor that may receive data and instructions from a storage system, at least one input device and at least one output device, and transmit the data and instructions to the storage system, the at least one input device and the at least one output device.

These computing programs (also known as programs, software, software applications, or codes) include machine instructions of a programmable processor, and may implement these calculation procedures by utilizing high-level procedures and/or object-oriented programming languages, and/or assembly/machine languages. As used herein, terms "machine-readable medium" and "computer-readable medium" refer to any computer program product, device and/or apparatus configured to provide machine instructions and/or data to a programmable processor (for example, a magnetic disk, an optical disk, a memory and a programmable logic device (PLD)), and includes machine-readable media that receive machine instructions as machine-readable signals. The term "machine-readable signals" refers to any signal used to provide machine instructions and/or data to a programmable processor.

In order to provide interactions with the user, the systems and technologies described herein may be implemented on a computer having: a display device (for example, a cathode ray tube (CRT) or a liquid crystal display (LCD) monitor) for displaying information to the user; and a keyboard and a pointing device (such as a mouse or trackball) through which the user may provide input to the computer. Other kinds of devices may also be used to provide interactions with the user; for example, the feedback provided to the user may be any form of sensory feedback (e.g., visual feedback, auditory feedback or haptic feedback); and input from the user may be received in any form (including acoustic input, voice input or tactile input).

The systems and technologies described herein may be implemented in a computing system that includes back-end components (for example, as a data server), a computing system that includes middleware components (for example, an application server), or a computing system that includes front-end components (for example, a user computer with a graphical user interface or a web browser, through which the user may interact with the implementation of the systems and technologies described herein), or a computing system including any combination of the back-end components, the middleware components or the front-end components. The components of the system may be interconnected by digital data communication (e.g., a communication network) in any form or medium. Examples of the communication network include: a local area network (LAN), a wide area network (WAN), and the Internet.

Computer systems may include a client and a server. The client and server are generally remote from each other and typically interact through the communication network. A client-server relationship is generated by computer programs running on respective computers and having a client-server relationship with each other.

Various forms of processes shown above may be reordered, added or deleted. For example, the blocks described in the disclosure may be executed in parallel, sequentially, or in different orders. As long as the desired results of the technical solution disclosed in the disclosure may be achieved, there is no limitation herein.

The foregoing specific implementations do not constitute a limit on the protection scope of the disclosure. It should be understood by those skilled in the art that various modifications, combinations, sub-combinations and substitutions may be made according to design requirements and other factors. Any modification, equivalent replacement and improvement made within the spirit and principle of the disclosure shall be included in the protection scope of the disclosure.

## Claims

1. A method for distilling a model, comprising:
obtaining (101; 201) a teacher model and a student model, the teacher model having a first intermediate fully connected layer, the student model having a second intermediate fully connected layer, an input of the first intermediate fully connected layer being a first data processing capacity M, an output of the first intermediate fully connected layer being the first data processing capacity M, an input of the second intermediate fully connected layer being a second data processing capacity N, an output of the second intermediate fully connected layer being the second data processing capacity N, M and N being positive integers, and M being greater than N;
transforming (102; 202), based on the first data processing capacity M and the second data processing capacity N, the second intermediate fully connected layer into an enlarged fully connected layer and a reduced fully connected layer, and replacing the second intermediate fully connected layer with the enlarged fully connected layer and the reduced fully connected layer to generate a training student model; and
distilling (103; 203) the training student model based on the teacher model.

2. The method of claim 1, wherein an input of the enlarged fully connected layer is the second data processing capacity N, an output of the enlarged fully connected layer is the first data processing capacity M, an input of the reduced fully connected layer is the first data processing capacity M, and an output of the reduced fully connected layer is the second data processing capacity N.

3. The method of claim 1 or 2, the enlarged fully connected layer having no activation function.

4. The method of any one of claims 1 to 3, wherein distilling (103; 203) the training student model based on the teacher model comprises:
obtaining a distillation loss; and
distilling the training student model based on the distillation loss and the teacher model.

5. The method of any one of claims 1 to 4, further comprising:
transforming (204) the training student model after the distilling to generate a prediction model.

6. The method of claim 5, wherein transforming (204) the training student model after the distilling to generate the prediction model comprises:
merging the enlarged fully connected layer and the reduced fully connected layer in the training student model after the distilling into a third intermediate fully connected layer to generate the prediction model.

7. An apparatus for distilling a model, comprising:
an obtaining module (410), configured to obtain a teacher model and a student model, the teacher model having a first intermediate fully connected layer, the student model having a second intermediate fully connected layer, an input of the first intermediate fully connected layer being a first data processing capacity M, an output of the first intermediate fully connected layer being the first data processing capacity M, an input of the second intermediate fully connected layer being a second data processing capacity N, an output of the second intermediate fully connected layer being the second data processing capacity N, M and N being positive integers, and M being greater than N;
a transforming and replacing module (420), configured to transform, based on the first data processing capacity M and the second data processing capacity N, the second intermediate fully connected layer into an enlarged fully connected layer and a reduced fully connected layer, and to replace the second intermediate fully connected layer with the enlarged fully connected layer and the reduced fully connected layer to generate a training student model; and
a distilling module (430), configured to distill the training student model based on the teacher model.

8. The apparatus of claim 7, wherein an input of the enlarged fully connected layer is the second data processing capacity N, an output of the enlarged fully connected layer is the first data processing capacity M, an input of the reduced fully connected layer is the first data processing capacity M, and an output of the reduced fully connected layer is the second data processing capacity N.

9. The apparatus of claim 7 or 8, the enlarged fully connected layer having no activation function.

10. The apparatus of any one of claims 7 to 9, wherein the distilling module (430) is configured to:
obtain a distillation loss; and
distill the training student model based on the distillation loss and the teacher model.

11. The apparatus of any one of claims 7 to 10, further comprising:
a transforming module (440), configured to transform the training student model after the distilling to generate a prediction model.

12. The apparatus of claim 11, wherein the transforming module (440) is configured to:
merge the enlarged fully connected layer and the reduced fully connected layer in the training student model after the distilling into a third intermediate fully connected layer to generate the prediction model.

13. An electronic device, comprising:
at least one processor; and
a storage device communicatively connected to the at least one processor; wherein,
the storage device stores an instruction executable by the at least one processor, and when the instruction is executed by the at least one processor, the at least one processor may implement the method for distilling the model of any one of claims 1 to 6.

14. A computer-readable storage medium having a computer instruction stored thereon, wherein the computer instruction is configured to enable a computer to implement the method for distilling the model of any one of claims 1 to 6.
